# EUROPÄISCHE PATENTSCHRIFT

(11) **EP 0 410 101 B1**
(45) Veröffentlichungstag und Bekanntmachung des Hinweises auf die Patenterteilung: **08.06.1994**
(21) Anmeldenummer: 90109642.0
(22) Anmeldetag: 21.05.1990
(51) Int. Cl.: H01R 4/70, H01R 4/22, H02G 15/04

(54) **Endverbindung von mindestens zwei abgeschirmten Kabeln**
Endconnection of at least two screened cables
Connection terminal pour au moins deux câbles blindés

(30) Priorität: 26.07.1989 DE 3924677
(43) Veröffentlichungstag der Anmeldung: 30.01.1991
(73) Patentinhaber: DAIMLER-BENZ AKTIENGESELLSCHAFT, 70327 Stuttgart (DE)
(72) Erfinder: Bräunig, Dieter, D-7000 Stuttgart 1 (DE); Willikens, Axel, D-7050 Waiblingen (DE)

(56) Entgegenhaltungen:
- EP-A- 0 052 241
- DE-A- 3 102 365

## Beschreibung

Die Erfindung betrifft eine Endverbindung von mindestens zwei abgeschirmten Kabeln gemäß dem Oberbegriff des Patentanspruches 1.

Aus der DE-B-10 43 450 ist eine gattungsgemäße Endverbindung bekannt, bei der aus mehreren Adern bestehende Kabel auf eine gemeinsame Endverbindungsstelle zugeführt werden, indem die einzelnen Adern der Kabel in Isolationskammern eines Isolationskörpers geführt werden. Die einzelnen Adern der Kabel werden dabei in den Isolationskammern des Isolationskörpers mit den entsprechenden anderen Adern der anderen Kabel verknüpft (beispielsweise durch Verdrillen). Durch das Einbringen der abisolierten Enden der Adern der Kabel in die Isolationskammern des Isolationskörpers wird dabei ein Kurzschluß durch Kontaktierung der abisolierten Enden verschiedener Adern der Kabel verhindert. Außerdem kann über die Endverbindungsstelle eine metallische Hülse gestülpt werden, die durch Gießharz ausgegossen werden kann.

Bei diesem bisher bekannten Endverbinder ergeben sich Nachteile dahin gehend, daß eine Abschirmung der Kabel an der Endverbindungsstelle nur bedingt möglich ist.

Aufgabe der Erfindung ist es, eine Endverbindung mehrerer abgeschirmter Kabel so zu gestalten, daß die Kabel, die verbundenen Adern und die Abschirmungen an der Endverbindungsstelle gegeneinander isoliert sind und daß die Endverbindungsstelle eine Abschirmung gegen äußere störende elektromagnetische Felder aufweist.

Diese Aufgabe wird bei einer gattungsgemäßen Endverbindung mehrerer abgeschirmter Kabel erfindungsgemäß mit den kennzeichnenden Merkmalen des Anspruchs 1 gelöst, wobei die Merkmale der Unteransprüche vorteilhafte Aus- und Weiterbildungen kennzeichnen.

Ein weiterer Vorteil der erfindungsgemäßen Endverbindung gegenüber dem bekannten Stand der Technik besteht darin, daß das Einbringen der Kabel vereinfacht ist, da die Isolationskammern des Isolationskörpers zunächst nach einer Seite offen sind.

Die erfindungsgemäße Endverbindung ist so gestaltet, daß die zu kontaktierenden Kabel zunächst in U-förmigen, d.h. auf einer Seite offenen kanalförmigen Isolationskammern auf die Verbindungsstelle zu geführt werden.

Mit der erfindungsgemäßen Endverbinder ist es möglich, zunächst die entsprechenden Adern der einzelnen Kabel zu verbinden und anschließend die Kabel und die durch die Verbindung der entsprechenden Adern erhaltenen Aderstränge so zu biegen, daß sie in der Form dem Verlauf der Isolationskammern des erfindungsgemäßen Isolationskörpers entsprechen. Dieser Verlauf ist im wesentlichen derart, daß die Kabel aus derselben Richtung auf die Endverbindungsstelle zu laufen, wobei die Aderstränge in die Richtung zurück gebogen werden, aus der die Kabel auf die Verbindungsstelle zu laufen, so daß sie in Isolationskammern des Isolationskörpers eingebracht werden können. Die verbundenen Abschirmungen der Kabel werden in einer solchen Richtung weitergeführt, daß sie durch ein Loch in der Kunststoffkappe des erfindungsgemäßen Endverbinders gefädelt werden können.

Dabei können mehrere Kabel in einer gemeinsamen Isolationskammer auf die Verbindungsstelle zu geführt werden. Es ist auch möglich, einen Aderstrang so zu biegen, daß er in eine Isolationskammer eingebracht wird, in der ein oder mehrere Kabel auf die Verbindungsstelle zu geführt werden. Es kann dabei i.a. nicht zu einem Kurzschluß kommen, weil sowohl das Kabel als auch die einzelnen Adern des Kabels jeweils für sich mit einer Isolation umgeben sind. Es sind somit nur die Kontaktstellen der einzelnen Adern der Kabel unisoliert. In einer vorteilhaften Ausführungsform wird die Isolation der einzelnen Adern der Kabel gegeneinander besonders sichergestellt, indem jeder der Aderstränge in eine eigene Isolationskammer eingebracht wird.

Um den erfindungsgemäßen Isolationskörper abzuschließen, wird eine Kunststoffkappe aufgebracht, wenn die Kabel und die Aderstränge in die Isolationskammern des Isolationskörpers eingebracht worden sind. Die Kunststoffkappe weist dabei ein Loch auf, durch das die verbundenen Abschirmungen der einzelnen Kabel gefädelt werden können. Diese Kunststoffkappe kann beispielsweise durch eine Klemmvorrichtung oder ein Gewinde auf dem Isolationskörper befestigt werden.

Die den Isolationskörper abschließende Kunststoffkappe wird so ausgebildet, daß sie die einzelnen Isolationskammern isolierend gegeneinander abschließt und eine metallische Außenfläche aufweist, die die Verbindungsstelle abschirmt. Eine besonders vorteilhafte Abschirmung der Kabel auch im Bereich der Endverbindungsstelle wird erreicht, wenn die verbundenen Abschirmungen der einzelnen Kabel mit der metallischen Außenfläche der Kunststoffkappe elektrisch leitend verbunden werden. Dazu werden die Abschirmungen der einzelnen Kabel in an sich bekannter Weise an der metallischen Außenfläche der Kunststoffkappe angebracht - beispielsweise durch Löten oder indem die Abschirmungen festgeklemmt werden -, nachdem die Abschirmungen durch das Loch in der Kunststoffkappe gefädelt worden sind. Die die Endverbindungsstelle abdeckende Kunststoffkappe muß dabei insbesondere bzgl. der metallischen Außenfläche eine solche Größe aufweisen, daß sie deutlich über die Punkte hinausragt, an denen die Verbindungsstellen der einzelnen Adern der Kabel in den Isolationskammern liegen. Es ist auch möglich, die Abschirmungen der Kabel in einer Isolationskammer des Isolationskörpers so zurückzuführen, daß sie aus der Kunststoffkappe herausragen. Eine Abschirmung der Endverbindungsstelle kann erreicht werden, indem die Abschirmungen um die Kunststoffkappe herum gebogen und an der metallischen Außenfläche der Kunststoffkappe elektrische leitend befestigt werden. Eine Isolation der metallischen Außenfläche der Kunststoffkappe kann erreicht werden, indem die Kunststoffkappe mit einem isolierenden Material umgeben wird. Dieses isolierende Material kann in an sich bekannter Weise an der Kunststoffkappe befestigt werden. Eine mögliche Ausführungsform dieser Isolierung der Kunststoffkappe besteht in der Verwendung eines Schrumpfschlauches, der über die Endverbindungsstelle gestülpt und anschließend erwärmt wird. In einer anderen Ausführungsform der Isolierung der Kunststoffkappe wird die metallische Außenfläche der Kunststoffkappe mit einem Heißschmelzkleber überzogen. Der Vorteil der Verwendung des Heißschmelzklebers besteht darin, daß in einfacher Weise nicht nur die metallische Außenoberfläche der Kunststoffkappe überzogen werden kann, sondern daß außerdem die die Kabeln und Aderstränge aufnehmenden Isolationskammer mit diesem Heißschmelzkleber ausgegossen werden können, so daß eine verbesserte Fixierung der Lage der Kabel erreicht wird gegenüber der Verwendung eines Schrumpfschlauches.

Ein Ausführungsbeispiel der Erfindung ist in der Zeichnung schematisch dargestellt und wird im folgenden näher beschrieben. Es zeigen:
Fig. 1: Eine Ausführungsform einer erfindungsgemäßen Endverbindung,
Fig. 2: einen seitlichen Schnitt durch eine weitere erfindungsgemäße Endverbindung und
Fig. 3: eine Draufsicht auf eine weitere erfindungsgemäße Endverbindung.

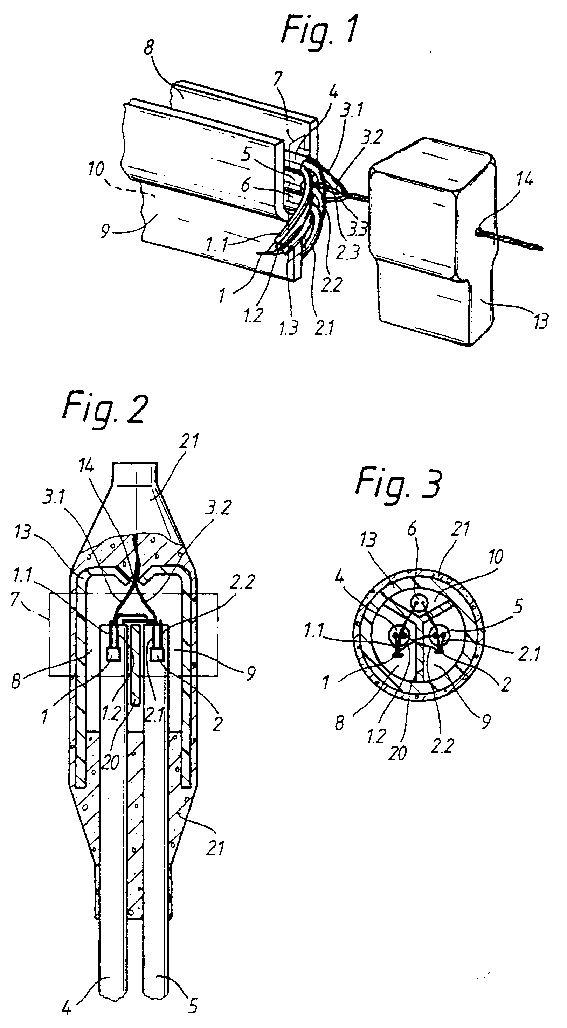

Wie aus Fig. 1 ersichtlich, werden mehrere Kabel 4, 5, 6 in einer gemeinsamen Isolationskammer 8 auf die Endverbindungsstelle 7 zugeführt. Die einzelnen Adern 1.1, 1.2, 1.3 und 2.1, 2.2, 2.3 der Kabel 4, 5, 6 werden in an sich bekannter Weise elektrisch leitend miteinander verbunden und anschließend so gebogen, daß sie in die Isolationskammern 9, 10 eingebracht werden. Alternativ dazu kann ein Aderstrang 1, 2 so gebogen werden, daß er in die Isolationskammer 8 eingebracht wird, in der die Kabel 4, 5, 6 auf die Verbindungsstelle 7 zugeführt werden. In diesem Fall genügt es, wenn der abgebildete Isolationskörper aus zwei Isolationskammern 8, 9 besteht. Die Abschirmungen 3.1, 3.2, 3.3 der Kabel 4, 5, 6 werden ebenfalls miteinander verbunden und zeigen bei dieser Ausführungsform der erfindungsgemäßen Endverbinder in die Längsrichtung der Kabel 4, 5, 6. Außerdem wird eine Kunststoffkappe 13 über der Endverbindungsstelle 7 angebracht. Diese Kunststoffkappe 13 kann beispielsweise befestigt werden, indem in die Seitenwände der Isolationskammern 8, 9, 10 sowie in die Innenseite der Kunststoffkappe 13 ein Gewinde geschnitten ist. In diesem Fall wird die Kunststoffkappe 13 auf den Isolationskörper aufgeschraubt. Alternativ ist es möglich, die Kunststoffkappe 13 zu befestigen, indem die Kunststoffkappe 13 mit einer Klemmvorrichtung auf dem Isolationskörper gehalten wird. In der in Fig. 1 dargestellten Ausführungsform ist die Kunststoffkappe 13 mit einem Loch 14 versehen, durch das die verbundenen Abschirmungen 3.1, 3.2, 3.3 der einzelnen Kabel 4, 5, 6 gefädelt werden. Es ist dann möglich, die Abschirmungen 3.1, 3.2, 3.3 der Kabel elektrisch leitend mit der abschirmenden metallischen Außenfläche der Kunststoffkappe 13 zu verbinden. Alternativ dazu können die verbundenen Abschirmungen 3.1, 3.2, 3.3 der Kabel 4, 5, 6 in einer Isolationskammer 8, 9, 10 so weit zurück geführt werden, daß sie unter der Kunststoffkappe 13 herausragen. Durch ein Umbiegen der verbundenen Abschirmungen 3.1, 3.2, 3.3 unterhalb der Kunststoffkappe 13 können die Abschirmungen 3.1, 3.2, 3.3 auch in diesem Fall mit der metallischen Außenoberfläche der Kunststoffkappe 13 in Verbindung gebracht werden.

In Fig. 2 ist ein seitlicher Schnitt durch eine andere erfindungsgemäße Endverbindung dargestellt. In dieser Darstellungsform sind nur zwei Kabel 4 und 5 zu sehen. Diese Kabel werden in getrennten Isolationskammern 8 und 9 auf die Endverbindungsstelle 7 zugeführt. Die beiden Isolationskammer 8 und 9 werden durch eine Trennwand 20 voneinander getrennt. An der Endverbindungsstelle 7 werden die Adern 1.1 und 1.2 sowie die Adern 2.1 und 2.2 der Kabel 4 und 5 zu den Adersträngen 1 und 2 verbunden. Die Aderstränge 1 und 2 werden zurückgebogen und in die Isolationskammern 8 und 9 eingebracht. Die Abschirmungen 3.1 und 3.2 werden durch ein Loch in der Kunststoffkappe 13 gefädelt und an der metallischen Außenfläche der Kunststoffkappe 13 festgelötet. Anschließend wird die Endverbindungsstelle 7 mit einem Heißschmelzkleber 21 überzogen, so daß die metallische Außenfläche der Kunststoffkappe 13 elektrisch isoliert ist. Außerdem werden dadurch die Isolationskammern 8 und 9 zumindest teilweise aufgefüllt, so daß ein Fixierung der Lage der Kabel 4 und 5 gegeben ist. Anstelle des Heißschmelzklebers 21 kann die Endverbindungsstelle 7 ebenfalls mit einem Schrumpfschlauch überzogen werden.

Fig. 3 zeigt eine Draufsicht auf eine erfindungsgemäße Endverbindung, bei der drei Kabel 4, 5 und 6 auf die Endverbindungsstelle zugeführt werden. Die Isolationskammern 8, 9 und 10 sind durch eine Trennwand 20 voneinander getrennt. Die Aderstränge 1.1 und 2.1 sind in die Isolationskammern 8 und 9 eingebracht. Außerdem ist die Kunststoffkappe 13 über die Endverbindungsstelle 7 geschoben. Diese Kunststoffkappe 13 ist mit einem Heißschmelzkleber 21 überzogen.

## Patentansprüche

1. Endverbindung von mindestens zwei Kabeln,
- wobei miteinander zu verbindende Adern der Kabel an der Verbindungsstelle isoliert sind von anderen Adern der Kabel,
- wobei miteinander zu verbindende Adern der Kabel in an sich bekannter Weise zu wenigstens einem Aderstrang leitend verbunden sind,
- wobei die Kabel und der/die Aderstränge in Isolationskammern eines Isolationskörpers auf die Endverbindungsstelle zugeführt sind,
- wobei bei mehreren Adersträngen die einzelnen Aderstränge in getrennten Isolationskammern des Isolationskörpers eingebracht sind,
- wobei der Isolationskörper mit einer metallischen Kappe abgeschlossen ist, die die Verbindungsstellen der Adern der Kabel deutlich überdeckt, wobei gleichzeitig eine elektrische Isolierung zwischen den Verbindungsstellen der Adern der Kabel und der metallischen Kappe besteht,
**dadurch gekennzeichnet,**
- daß auch die Abschirmungen (3.1, 3.2, 3.3) der einzelnen abgeschirmten Kabel (4, 5, 6) miteinander verbunden sind,
- daß die metallische Kappe eine eine metallische Außenfläche aufweisende Kunststoffkappe (13) ist,
- daß die Kunststoffkappe (13) ein Loch aufweist, durch das die verbundenen Abschirmungen (3.1, 3.2, 3.3) der einzelnen Kabel (4, 5, 6) gefädelt und mit der metallischen Außenfläche elektrisch leitend verbunden sind und
- daß die Kunststoffkappe (13) mit einer isolierenden Schicht umgeben ist, deren Aufbringen gleichzeitig eine Fixierung der Lage der Kabel mit sich bringt.

2. Endverbindung nach Anspruch 1,
**dadurch gekennzeichnet,**
daß mindestens zwei zu kontaktierende Kabel (4, 5, 6) in einer gemeinsamen Isolationskammer (8, 9, 10) des Isolationskörpers auf die Endverbindungsstelle (7) zugeführt sind.

3. Endverbindung nach Anspruch 1,
**dadurch gekennzeichnet,**
daß jedes der zu kontaktierenden Kabel (4, 5, 6) in einer gesonderten Isolationskammer (8, 9, 10) auf die Endverbindungsstelle (7) zugeführt ist.

4. Endverbindung nach einem der Ansprüche 1 bis 3,
**dadurch gekennzeichnet,**
daß mindestens ein Aderstrang (1, 2) so gebogen ist, daß er in eine Isolationskammer (8, 9, 10) eingebracht ist, in der mindestens ein Kabel (4, 5, 6) auf die Verbindungsstelle (7) zugeführt ist.

5. Endverbindung nach einem der Ansprüche 1 bis 3,
**dadurch gekennzeichnet,**
daß jeder der Aderstränge (1, 2) so gebogen ist, daß er in eine eigene Isolationskammer (8, 9, 10) eingebracht ist.

6. Endverbindung nach einem der Ansprüche 1 bis 5,
**dadurch gekennzeichnet,**
daß die verbundenen Abschirmungen (3.1, 3.2, 3.3) der Kabel (4, 5, 6) wie ein Aderstrang (1, 2) in eine Isolationskammer (8, 9, 10) des Isolationskörpers eingebracht sind, wobei die verbundenen Abschirmungen (3.1, 3.2, 3.3) um die untere Kante der Kunststoffkappe (13) herum gebogen und an der metallischen Außenfläche der Kunststoffkappe (13) elektrisch leitend angebracht sind.

7. Endverbindung nach einem der Ansprüche 1 bis 5,
**dadurch gekennzeichnet,**
daß die Kunststoffkappe (13) ein gesondertes Loch aufweist, durch das die verbundenen Abschirmungen (3.1, 3.2, 3.3) gefädelt sind, um sie mit der metallischen Außenfläche der Kunststoffkappe (13) elektrisch leitend zu verbinden.

8. Endverbindung nach einem der Ansprüche 1 bis 7,
**dadurch gekennzeichnet,**
daß die die Kunststoffkappe (13) abdeckende isolierende Schicht realisiert ist, indem auf die Kunststoffkappe (13) ein Heißschmelzkleber (21) aufgebracht wird, der die die Kabel (4, 5, 6) und den/die Aderstränge (1, 2) führenden Isolationskammern (8, 9, 10) des Isolationskörpers zumindest teilweise auffüllt.

9. Endverbindung nach einem der Ansprüche 1 bis 7,
**dadurch gekennzeichnet,**
daß die die Kunststoffkappe (13) abdeckende isolierende Schicht realisiert ist, indem über die Kunststoffkappe (13) ein Schrumpfschlauch gestülpt und anschließend erwärmt wird.

## Claims

1. End connection of at least two cables,
- cores, to be connected to one another, of the cables being insulated from other cores of the cables at the connection point,
- cores, to be connected to one another, of the cables being conductively connected in a manner known per se to form at least one core strand,
- the cables and the core strand/s being guided towards the end connection point in insulating chambers of an insulating body,
- in the case of a plurality of core strands, the individual core strands being introduced in separate insulating chambers of the insulating body,
- the insulating body being closed off with a metallic cap which clearly covers the connection points of the cores of the cables, there simultaneously being an electric insulation between the connection points of the cores of the cables and the metallic cap,
characterized in that
- the screens (3.1, 3.2, 3.3) of the individual screened cables (4, 5, 6) are also connected to one another,
- the metallic cap is a plastic cap (13) having a metallic outer surface,
- the plastic cap (13) has a hole through which the connected screens (3.1, 3.2, 3.3) of the individual cables (4, 5, 6) are threaded and electrically conductively connected to the metallic outer surface, and
- the plastic cap (13) is surrounded with an insulating layer, the application of which simultaneously entails a fixing of the position of the cables.

2. End connection according to Claim 1, characterized in that at least two cables (4, 5, 6) to be contacted are guided towards the end connection point (7) in a common insulating chamber (8, 9, 10) of the insulating body.

3. End connection according to Claim 1, characterized in that each of the cables (4, 5, 6) to be contacted is guided towards the end connection point (7) in a separate insulating chamber (8, 9, 10).

4. End connection according to one of Claims 1 to 3, characterized in that at least one core strand (1, 2) is bent in such a way that it is introduced into an insulating chamber (8, 9, 10), in which at least one cable (4, 5, 6) is guided towards the connection point (7).

5. End connection according to one of Claims 1 to 3, characterized in that each of the core strands (1, 2) is bent in such a way that it is introduced into its own special insulating chamber (8, 9, 10).

6. End connection according to one of Claims 1 to 5, characterized in that the connected screens (3.1, 3.2, 3.3) of the cables (4, 5, 6) are introduced like a core strand (1, 2) into an insulating chamber (8, 9, 10) of the insulating body, the connected screens (3.1, 3.2, 3.3) being bent around the lower edge of the plastic cap (13) and electrically conductively attached to the metallic outer surface of the plastic cap (13).

7. End connection according to one of Claims 1 to 5, characterized in that the plastic cap (13) has a separate hole through which the connected screens (3.1, 3.2, 3.3) are threaded for their electrically conductive connection to the metallic outer surface of the plastic cap (13).

8. End connection according to one of Claims 1 to 7, characterized in that the insulating layer covering the plastic cap (13) is obtained by applying to the plastic cap (13) a hot-melt adhesive (21), which at least partially fills the insulating chambers (8, 9, 10) of the insulating body which guide the cables (4, 5, 6) and the core strand/s (1, 2).

9. End connection according to one of Claims 1 to 7, characterized in that the insulating layer covering the plastic cap (13) is obtained by a heat-shrinkable sleeve being placed over the plastic cap (13) and then heated.

## Revendications

1. Connexion en bout d'au moins deux câbles, dans laquelle
- des brins de câbles à relier entre eux sont isolés vis-à-vis d'autres brins de câbles à l'emplacement de la connexion,
- des brins, appartenant aux câbles, à relier entre eux sont reliés de façon conductrice au moins en un toron de brin de façon connue,
- les câbles et le ou les torons de brins sont amenés à la position de connexion en bout dans des chambres isolantes d'un corps isolant,
- lorsqu'il existe plusieurs torons de câbles, les torons individuels sont introduits dans des chambres isolantes séparées faisant partie du corps isolant,
- le corps isolant est fermé par un capuchon métallique qui recouvre de façon significative les emplacements de liaison des brins des câbles, et une isolation électrique entre les emplacements de liaison des brins des câbles et les capuchons métalliques est également réalisée,
**caractérisée**
en ce que les blindages (3.1, 3.2, 3.3) des câbles blindés individuels (4, 5, 6) sont eux-aussi reliés entre eux,
- en ce que le capuchon métallique est un capuchon en matière plastique (13) comportant une surface extérieure métallique,
- en ce que le capuchon en matière plastique (13) comporte un trou à travers lequel les blindages reliés (3.1, 3.2, 3.3) des câbles individuels (4? 5, 6) sont enfilés et sont reliés de façon électriquement conductrice à la surface extérieure métallique et
- en ce que le capuchon en matière plastique (13) est entouré d'une couche isolante, dont l'application provoque simultanément une fixation de la position des câbles.

2. Connexion en bout selon la revendication 1,
**caractérisée en ce que**
au moins deux câbles à mettre en contact (4, 5, 6) sont amenés sur l'emplacement de connexion en bout (7) dans une chambre isolante commune (8, 9, 10) du corps isolant.

3. Connexion en bout selon la revendication 1,
**caractérisée en ce que**
chacun des câbles à mettre en contact (4, 5, 6) est amené à l'emplacement de connexion en bout (7) dans une chambre isolante séparée (8, 9, 10).

4. Connexion en bout selon l'une des revendications 1 à 3,
**caractérisée en ce que**
au moins un toron de brin (1, 2) est cintré d'une manière telle qu'il est introduit dans une chambre isolante (8, 9, 10), dans laquelle au moins un câble (4, 5, 6) est amené à l'emplacement de connexion (7).

5. Connexion en bout selon l'une des revendications 1 à 3,
**caractérisée en ce que**
chacun des torons (1, 2) de brins est cintré d'une manière telle qu'il est amené dans une chambre isolante propre (8, 9, 10).

6. Connexion en bout selon l'une des revendications 1 à 5,
**caractérisée en ce que**
les blindages reliés (3.1., 3.2., 3.3.) du câble (4, 5, 6) sont amenés sous forme d'un toron de câble (1, 2) dans une chambre isolante (8, 9, 10) du corps isolant, les blindages reliés (3.1, 3.2, 3.3) étant cintrés autour de l'arête inférieure du capuchon en matière plastique (13) et étant amenés de façon électriquement conductrice sur la surface extérieure métallique du capuchon en matière plastique (13).

7. Connexion en bout selon l'une des revendications 1 à 5,
**caractérisée en ce que**
le capuchon en matière plastique (13) présente un trou séparé à travers lequel sont enfilés les blindages reliés (3.1, 3.2, 3.3) afin de les relier de façon électriquement conductrice avec la surface extérieure métallique du capuchon en matière plastique 13.

8. Connexion en bout selon l'une des revendications 1 à 7,
**caractérisée en ce que**
la couche isolante recouvrant le capuchon de matière plastique est réalisée en disposant sur le capuchon en matière plastique (13) une colle fondant à chaud (21) qui remplit au moins partiellement les chambres isolantes (8, 9, 10) d'amenée des câbles (4, 5, 6) et due ou des torons de brins (1, 2) du corps isolant.

9. Connexion en bout selon les revendications 1 à 7,
**caractérisée en ce que**
la couche isolante revêtant le capuchon en matière plastique (13) est réalisée en disposant sur le capuchon en matière plastique (13) un tube souple thermorétrécissable et en le chauffant ensuite.
